# EUROPÄISCHE PATENTSCHRIFT

(11) **EP 1 251 289 B1**
(45) Veröffentlichungstag und Bekanntmachung des Hinweises auf die Patenterteilung: **24.01.2007**
(21) Anmeldenummer: 02007610.5
(22) Anmeldetag: 04.04.2002
(51) Int. Cl.: F16D 65/12, F16D 66/02

(54) **Reibscheibe**
Friction disc
Disque de friction

(30) Priorität: 18.04.2001 DE 10118920
(43) Veröffentlichungstag der Anmeldung: 23.10.2002
(73) Patentinhaber: AUDI AG, 85045 Ingolstadt (DE)
(72) Erfinder: Bauer, Moritz, Dipl.-Ing., 86153 Augsburg (DE); Benitsch, Bodo, Dipl.-Ing., 86647 Buttenwiesen (DE); Christ, Martin, Dr.Dipl.-Phys., 86517 Wehringen (DE); Gruber, Udo, Dipl.-Ing. (FH), 86356 Neusäss (DE); Heine, Michael, Dipl.-Chem.Dr.rer.nat, 86695 Allmannshofen (DE); Kienzle, Andreas, Dipl.-Chem.Dr.rer.nat., 86672 Thierhaupten (DE); Rosenlöcher, Jens , Dipl.-Ing., 86153 Augsburg (DE); Zimmermann-Chopin, Rainer, Dipr.-Ing.Dr.rer.nat., 86679 Ellgau (DE)
(74) Vertreter: Deckers, Hellmuth Alexander

(56) Entgegenhaltungen:
- EP-A- 0 670 434
- EP-A- 1 248 009
- DE-A- 2 749 772

## Beschreibung

Die Erfindung betrifft eine Reibscheibe, insbesondere eine Brems- oder Kupplungsscheibe aus mit kohlenstoffhaltigen Fasern verstärktem keramischen Verbundwerkstoff mit mindestens einer als Reibfläche ausgebildeten Deckfläche.

Der Einsatz von Verbundwerkstoffen in Reibscheiben für Bremsenanwendungen ist aus dem Luftfahrtbereich und dem Bereich der Rennfahrzeuge bekannt. Sie bieten den Vorteil guter tribologischer Eigenschaften bis zu höchsten Belastungen und Temperaturen. Technisch bewährt sind hierbei Materialien aus mit Kohlenstoffasern verstärkten Kohlenstoff-Werkstoffen (CFC). In der neuesten Generation von Werkstoffen für Reib- und Bremsscheiben werden faserverstärkte Keramik-Materialien mit Matrices insbesondere auf der Basis von Silicium, Siliciumcarbid und Kohlenstoff oder deren Mischungen mit anderen Matrix-Werkstoffen eingesetzt. Die weit verbreitete Verwendung von Kohlenstoff- oder Graphitfasern in Verbindung mit Matrixwerkstoffen, die Mischungen von Siliciumcarbid, Silicium und Kohlenstoff sind, führt zu den sogenannten "C/SiC-Werkstoffen", die beispielsweise in der Patentanmeldung DE-A 197 10 105 beschrieben sind. Reibscheiben und insbesondere Bremsscheiben weisen im allgemeinen zwei Zonen mit unterschiedlichen Werkstoffeigenschaften und Zusammensetzung auf, die durch das unterschiedliche Anforderungsprofil bestimmt werden. Für C/SiC-Werkstoffe wird ein geeigneter Aufbau beispielsweise in der DE-A 44 38 456 beschrieben. Die obenliegende und dem Verschleiß ausgesetzte Zone ist die sogenannte Reibfläche, die sich durch die besonderen Reib- und Verschleißeigenschaften auszeichnet. Das darunterliegende Material bildet die sogenannte Tragzone, deren Aufgabe im wesentlichen darin besteht, die Reibkräfte aufzunehmen und an die Fixierung (z. B. Montage an der Achse des gebremsten Rades) weiterzuleiten, sowie die Reib- oder Bremsenergie aufzunehmen und abzuleiten. Obwohl sich die C/SiC-Werkstoffe durch eine hohe Temperaturbeständigkeit über 1000 °C sowie hohe Verschleißbeständigkeit auszeichnen, kann im Langzeiteinsatz unter den Anwendungsbedingungen ein oxidativer (chemische Veränderung der Oberfläche und/oder der darunterliegenden Schichten) und tribologischer Verschleiß (Abrieb) auftreten.

Den CFC- und auch den C/SiC-Materialien ist gemeinsam, daß sie Kohlenstoff in Faserform und/oder der Matrix enthalten, wobei dieser bei den unter Anwendungsbedingungen im Dauereinsatz auftretenden Temperaturen einer merklichen Oxidation ausgesetzt ist. Durch den Abbrand des Kohlenstoffs wird das Gefüge geschwächt und die Festigkeit verringert. Die mechanischen Eigenschaften des Verbundwerkstoffes werden keramikähnlicher, was besonders durch eine Abnahme der Bruchzähigkeit gekennzeichnet ist. Diese Schwächung ist besonders für die Funktion der Tragzone sehr nachteilig, da ein Materialversagen im Bereich der Fixierungen von Brems- oder Reibscheiben zu einem Totalversagen der Konstruktion führen kann. Dies ist um so bedeutender, da Kemmikwerkstoffe als typisches Versagensmuster einer mechanischen Überbeanspruchung ein Sprödbruchverhalten aufweisen. Bei Überbeanspruchung findet daher im Gegensatz zu metallischen Werkstoffen, wie beispielsweise bei Graugußbremsscheiben, kein plastisches Fließen und keine Deformation mehr statt, sondern ein katastrophaler Bruch.

Aus der Patentanmeldung EP 1 248 009 A2 ist bekannt, die Gesamtbelastung bei Bremsscheiben aus mit C-Fasern verstärkten keramischen Werkstoffen dadurch anzuzeigen, daß in der Bremsscheibe ausgehend von der Reibfläche Indikatorelemente vorgesehen sind, deren Oxydationsbeständigkeit gegenüber dem Werkstoff der Bremsscheibe vermindert ist. Der Abbrand dieser Indikatorelemente, ist ein Maß für die von der Bremsscheibe erlittene Gesamtbelastung.

Der abrasive Verschleiß in Bremssystemen wird üblicherweise gemessen, indem elektronische Sensoren in den den Reibringen gegenüberliegenden Reibbelägen angebracht werden, wie beispielsweise in der US-A 4 298 857 beschrieben. Hier sind elektrische Kontakte in die Reibfläche integriert, die durch den Materialabtrag unterbrochen werden. Nachteilig an diesem Verfahren ist, daß sich derartige Sensoren nicht mit wirtschaftlich vertretbarem Aufwand in die Reibscheibe selbst integrieren lassen. Auch hinsichtlich der in den Reibscheiben auftretenden Anwendungstemperaturen, die bis über 1000 °C betragen können, sind elektronische und elektrische Systeme in den Reibscheiben kaum zu verwirklichen. Eine andere Methode, den abrasiven Verschleiß der Reibfläche anzuzeigen, sind in die Reibfläche eingelassene Vertiefungen, die durch den anwendungsgemäßen Materialabtrag der gesamten Reibfläche unkenntlich werden, wie zum Beispiel in EP-A 0 985 845 beschrieben. Beide Systeme zeigen jedoch nur den Verschleiß der Reibzone, aber nicht den Zustand des oxidativen Verschleißes der Tragzone an und sind damit ungeeignet für Aussagen über die mechanischen Eigenschaften des beanspruchten Systems.

Es ist daher Aufgabe der Erfindung, ein auch als Sensor bezeichnetes Element in die Reibscheibe zu integrieren, welches in der Lage ist, den Verschleißzustand der Reibscheibe optisch, akustisch oder auf andere Weise für den Benutzer bemerkbar zu machen, bevor eine Schwächung und Beeinträchtigung der Funktion der Tragzone insbesondere durch oxidativen Verschleiß eintritt. Die Integration des Sensors soll in einem kostengünstigen Verfahrensschritt während der Fertigung der Reibscheibe aus faserverstärktem keramischen Verbundwerkstoff oder C/SiC erfolgen.

Die vorliegende Erfindung löst das Problem, indem in die Reibfläche oder an anderen geeigneten Positionen der Reibscheibe Flächenelmnente oder flächige Sensoren eingelassen sind, deren oxidativer Verschleiß schneller fortschreitet als der für den Rest der Reibfläche der Scheibe. Der Verschleiß der flächigen Sensoren macht sich optisch, akustisch oder mechanisch bemerkbar. Die Reibscheibe kann dann ausgewechselt oder nachbearbeitet werden, bevor sie selbst, das heißt insbesondere die Tragzone, einen deutlich erkermbaren Verschleiß oder oxidative Schädigung zeigt. Die flächigen Sensoren bestehen bevorzugt aus kohlenstoffhaltigen und/oder graphitischen Werkstoffen, die eine geringere Oxidationsbeständigkeit aufweisen als die Reibfläche und die Tragzone. Die durch den Bremsvorgang verursachte Erhitzung der Reibscheibe führt zu einem allmählichen oxidativen Angriff auf die gegen Oxidation empfindlichen Werkstoffe, insbesondere die Kohlenstoffstrukturen (Kohlenstoff-Fasern und Kohlenstoff-Partikel oder Bereiche in der Matrix). Dadurch werden die flächigen Sensoren oberflächlich abgebaut und erhalten ein rauhes, poröses oder löchriges Aussehen. Diese Veränderung der Konsistenz und/oder Oberflächenmorphologie kann beispielsweise durch eine einfache Sichtprüfung festgestellt werden. Werden die Sensoren an den inneren Oberflächen der Reibscheibe angebracht, zum Beispiel in Kühlkanälen oder Stimflächen, die einer einfachen Sichtprüfung nicht zugänglich sind, so kann die vollständige Zersetzung des Sensorkörpers als Verschleiß-Indikation herangezogen werden. Der Sensor ist dann so ausgelegt, daß durch vollständige Zersetzung seines Materials eine ungleichmäßige Massenverteilung innerhalb der Reibscheibe erzeugt wird, die sich durch Unwucht, verminderte Laufruhe oder Vibrationen bemerkbar macht. Das Fehlen von Volumenelementen durch vollständige Zersetzung eines Sensorkörpers kann sich auch durch ein verändertes Fahr- oder Bremsgeräusch bemerkbar machen.

Gegenstand der Erfindung ist daher eine Reibscheibe, insbesondere eine Brems- oder Kupplungsscheibe aus mit Kohlenstoffasern (auch als C-Fasern bezeichnet) verstärktem Keramik-Verbundwerkstoff **A**, mit mindestens einer als Reibfläche ausgebildeten Deckfläche, dadurch gekennzeichnet, daß mehr als 0,1 % und bis zu 20 % der Reibfläche (ein Flächenelement) aus einem anderen Werkstoff **B**, insbesondere aus einem kohlenstoffhaltigen Werkstoff, besteht, wobei dieser andere WerkstoffB eine geringere Verschleiß- und Oxidationsbeständigkeit aufweist als der Werkstoff der restlichen Reibfläche und der Tragzone der Reibscheibe und so als Sensor den Verschleißzustand der Reibscheibe bemerkbar macht. Bevorzugt ist der Werkstoff A der Matrix eine Mischung von Siliciumcarbid, Silicium und Kohlenstoff.

Der Unterschied der Beständigkeit zwischen dem Werkstoff **B** dieses Flächenelements und dem Werkstoff **A** der Reibscheibe und/oder Tragzone wird so gewählt, daß sich der Verschleiß im Bereich des als Sensor wirkenden Flächenelementes im Betrieb optisch, akustisch oder anderweitig für den Betreiber bemerkbar macht, bevor die übrige Reibscheibe, inklusive der Tragzone, ihrerseits deutlich erkennbaren Verschleiß aufzeigt. Die aus dem Werkstoff **B** geringerer Beständigkeit ausgeführten Flächenelemente können zur Vermeidung von Unwuchten im unverschlissenen Zustand bevorzugt symmetrisch bezüglich der Rotationsachse angeordnet werden, wobei mindestens 2 derartige Flächenelemente in die Reibscheibe integriert werden. Die Flächenelemente können polygonal, sternförmig, ellipsenförmig oder bevorzugt kreisförmig ausgeführt werden.

Die Einbringung der Sensor-Elemente in die Reibscheiben erfolgt vorteilhafterweise innerhalb des Prozesses zur Fertigung der Reibscheiben.

Als Werkstoff A für die Reib- und für die Tragscheibe werden insbesondere über Flüssiginfiltration mit Silicium von Kohlenstoff-haltigen Werkstoffen hergestellte C/SiC-Werkstoffe bevorzugt, obwohl auch andere faserverstärkte Keramikwerkstoffe geeignet sind.

Die Sensoren können in dem bevorzugten Fall der Verwendung von CSiC-Werkstoffen für die Reibscheibe als Vorkörper in die Reibscheibe vor der Silicierung eingebracht und dann gemeinsam mit der Reibscheibe dem Silicierungsschritt unterworfen werden. Als Werkstoff für die Vorkörper der Sensoren werden Koblenstuff-Werkstoffe unterschiedlicher Ordnungsgrade und Provenienz eingesetzt. Bevorzugt als Kohlenstoffmaterial sind Graphite, insbesondere Feinkorngraphit, Graphitprodukte, C-Fasern in Form von Geweben, Geflechten, Vliesen oder Matten, CFC-Material, verkokte Hölzer und Kohle. Besonders bevorzugt sind Graphite, C-Fasermatten und CFC-Material. Als weitere Bestandteile der Vorkörper der Sensoren können Oxide, Nitride, Silicide und Carbide enthalten sein, die die Reaktivität der Kohlenstoffmaterialien gegenüber der Siliciumschmelzinfiltration und der anwendungsgemäßen Oxidation günstig beeinflussen. Besonders bevorzugt sind Bornitrid und Aluminiumoxid. Erfindungsgemäß wird die Zusammensetzung der Vorkörper so eingestellt, daß der Werkstoff **B** der Sensoren nach der Infiltration bevorzugt einen Kohlenstoffgehalt (Massenanteil) von über 40%, bevorzugt über 60% und besonders bevorzugt über 90% aufweist.

In einer Ausgestaltung der Erfindung werden für die Herstellung von Reibscheiben aus C/SiC die Vorkörper der Sensoren vor der Siliciuminfiltration und Silicierung in hierfür vorgesehene Aussparungen (Vertiefungen oder Bohrungen) des mit Kohlenstoffasern verstärkten Kohlenstoff-haltigen Vorkörpers oder die CFC-Form des Reibringes eingelegt oder eingeklebt. Als Kleber werden Mischungen verwendet, die insbesondere aus Kohlenstoffwerkstoffen und pyrolysierbaren Bindern bestehen, die sich silicieren lassen. Im Prinzip können aber auch alle anderen für das Verkleben von Keramik geeigneten Kleber verwendet werden, deren Klebwirkung durch die Silicierung nicht verlorengeht. Danach wird das Material mit flüssigem Silicium infiltriert, wobei sich der C/SiC-Werkstoff ausbildet und die Sensorelemente fest mit dem Reibring verbunden werden. Auch das Kohlenstoffmaterial der Sensoren wird dabei teilweise mitsiliciert und teilweise zu SiC umgesetzt. Hierdurch wird auch das Verschleiß- und Oxidationsverhalten der Sensoren verändert.

Ein wesentlicher Aspekt der Erfindung ist daher die Wahl der geeigneten Zusammensetzung der Vorkörper für die Sensoren, so daß sich nach der Silicierung die der Aufgabe der Reibscheibe gemäße entsprechend verminderte Verschleiß- und Oxidationsbeständigkeit des Sensors einstellt. Bei der geometrischen Ausführung der Sensoren sind im Prinzip nur die Funktion der Reibfläche und der Tragzone sowie der gewünschte Indikationsmechanismus als beschränkende Faktoren zu berücksichtigen. Ist ein Sensor mit rein optischer Indikation zur Durchführung von Sichtprüfungen vorgesehen, so ist dieser auf der Reibfläche des Reibringes unterzubringen. Unter Reibfläche ist die gesamte Deck- und Bodenfläche der (zylindrischen) Reibscheibe, nicht nur die dem Reibpartner gegenüberliegende Fläche zu verstehen. Die erfindungsgemäße Plazierung der flächigen Sensoren ist daher nicht auf die der Reibung ausgesetzte Zone der Reibfläche beschränkt. Erfindungsgemäß kann die Fläche der Sensoren so groß und auf solche Weise ausgeformt werden, daß die Reibwirkung der Reibfläche nur unwesentlich beeinträchtigt wird. Üblicherweise ist die Oberfläche eines als Sensor wirkenden Flächenelements größer als 0,1% der Oberfläche der Reibfläche, bevorzugt größer 1% und besonders bevorzugt 2 bis 20%. Dabei ist es auch möglich, mehrere gleichartige oder verschiedene Sensorelemente einzusetzen, wobei sich die gesamte Sensorfläche entsprechend erhöht. Die geometrische Ausführung der Sensorfläche kann nahezu beliebig erfolgen, wobei nur darauf zu achten ist, daß genügend große Flächenbereiche entstehen, so daß eine Sichtprüfung möglich ist. Häufig werden die Sensoren in Kreisform oder in quadratischer oder trapezoider Form ausgeführt. Bevorzugt ist auch eine Ausführung in Form von Buchstaben und Piktogrammen. Die Dicke der Sensor-Elemente ist im wesentlichen durch die Funktion der Tragzone bestimmt. Läßt die Festigkeitsverteilung der Tragzone dies zu, so kann der Sensor auch von einer Oberfläche der Reibscheibe bis zur anderen durch die Tragzone hindurchreichen. Erfindungsgemäß wird hierzu kein flächiger, sondern ein stabförmiger Sensor eingesetzt. Üblicherweise liegt die Dicke der flächigen Sensoren bei unter 100% der Dicke der Reibscheibe, bevorzugt bei unter 51% und besonders bevorzugt bei unter 10%. Für Reibscheiben mit Reibschicht liegt die Dicke des Sensors üblicherweise beim 0,1 bis 10-fachen der Dicke der Reibschicht, bevorzugt beim ca. 1-fachen. In einer weiteren Ausführung wird eine stabförmige Variante eingesetzt, bei der der Sensor von einer Oberfläche der Reibscheibe bis zur anderen hindurchreicht. Die Länge des stabförmigen Sensors beträgt üblicherweise 80 bis 100% der Dicke der Reibscheibe, bevorzugt 90 bis 100% und besonders bevorzugt ca. 100%. In jedem Fall führt der Abtrag der Sensoroberfläche zumindest zu einer optischen Indikation.

In einer weiteren vorteilhaften Ausgestaltung der Erfindung werden die Sensoren in die fertige mit Aussparungen versehene Reibscheibe eingelegt und befestigt, beispielsweise durch Kleben oder Löten. Wird als Werkstoff für die Reibscheibe C/SiC verwendet, so wird erst nach der Fertigstellung des C/SiC-Reibringes, das heißt nach der Flüssigsilicierung, in die Oberfläche eingeklebt. Hier wird dasselbe Material wie oben beschrieben für die Sensoren eingesetzt, das Sensorelement (Werkstoff **B**) weist hier ebenfalls bevorzugt einen Massenanteil an Kohlenstoff von mindestens 40 % auf. Gegenüber der Variante, die Sensoren gemeinsam mit dem Vorkörper des Reibrings zu silicieren, hat dies den Vorteil, daß die Festigkeit der Klebeverbindung in einfacher Weise den Erfordernissen der Sensorwirkung angepaßt werden kann. Als Kleber werden Mischungen verwendet, die insbesondere aus Kohlenstoffwerkstoffen und pyrolysierbaren Bindern bestehen. Im Prinzip können aber auch alle anderen für das Verkleben von Keramik geeigneten Kleber verwendet werden. In einer besonders vorteilhaften Ausgestaltung der Erfindung wird die Klebeverbindung so schwach ausgelegt, daß der Sensor bei der zu indizierenden Laufleistung des Reibringes aus der Verankerung teilweise oder ganz herausfällt. Hierdurch kann neben der optischen Indikatorwirkung auch eine mechanische Wirkung erzielt werden. Bei geeigneter Größe und Positionierung des Sensors wird durch das Ausbrechen des Sensors eine Unwucht erzeugt, die zu Vibrationen beim anwendungsgemäßen Einsatz der Reibscheibe führt. Erfindungsgemäß kann die Fläche der Sensoren so groß gewählt werden, daß die Reibwirkung der Reibfläche nur unwesentlich beeinträchtigt wird. Üblicherweise ist die Oberfläche des Sensors auch hier größer als 0,1% der Oberfläche der Reibfläche, bevorzugt 1 bis 5% und besonders bevorzugt 2 bis 15%. Die Dicke der Sensoren kann auch hier von wenigen Prozent der Dicke des Reibscheibe, zum Beispiel 2 %, bis zu 100% der Dicke der Reibscheibe reichen. Üblicherweise liegt die Dicke der flächigen Sensoren in dieser Ausführungsform bei unter 100% der Dicke der Reibscheibe, bevorzugt bei unter 51% und besonders bevorzugt bei unter 10%. In einer weiteren Ausführung kann auch hier eine stabförmige Variante eingesetzt werden, bei der der Sensor von einer Oberfläche der Reibscheibe bis zur anderen hindurchreicht. Die Länge des stabförmigen Sensors beträgt ebenfalls üblicherweise 80 bis 100% der Dicke der Reibscheibe, bevorzugt 90 bis 100% und besonders bevorzugt ca. 100%. Diese Ausführungsform der Erfindung ist naturgemäß nicht auf C/SiC-Werkstoffe beschränkt, sondern erlaubt die Kombination beliebiger Paare von Werkstoffen **A** für Reibfläche (und Tragzone) und Werkstoffen **B** für die Sensor-Körper, soweit die Bedingung der verminderten oxidativen oder Abrieb-Beständigkeit für den Werkstoff **B** der Sensorelemente im Vergleich zum Werkstoff **A** der Reibfläche oder der Tragzone erfüllt ist.

Die Idee der Erfindung umfaßt auch Ausführungen, bei denen sich die flächigen Sensoren an der Stirnfläche oder auch auf der inneren Oberfläche innenbelüfteter Scheiben befinden. Dabei ist es nur notwendig, daß ein ungehinderter Luftzutritt zur Auslösung des oxidativen Verschleißes stattfinden kann und die Indikationswirkung des Sensors eintreten kann. Im Falle der Anbringung des Sensors auf der Stirnfläche der Scheibe oder innerhalb der innenbelüfteten Scheibe tritt die optische Wirkung des Sensors in den Hintergrund. Als zusätzlicher Indikationsmechanismus kann daher das Volumen und die Geometrie des Sensors so gewählt werden, daß sich der Verschleiß des Sensors akustisch oder mechanisch bemerkbar macht. Dies wird beispielsweise dadurch erreicht, daß der Sensor nicht nur oberflächlich, sondern ganz oder teilweise ausbrennt und durch die veränderte Volumen- bzw. Massenverteilung innerhalb der Reibscheibe im Betrieb Unwucht oder Vibrationen erzeugt, oder zu einem ungleichmäßigen Reibverhalten, dem sogenannten Rubbeln führen. Diese Erscheinungen können dann als Indikationswirkung des Sensors herangezogen werden.

Die Sensorelemente werden hierzu in vorteilhafter Weise so in der Reibscheibe angebracht, daß bei einem durch Verschleiß oder Oxidation hervorgerufenem Massenverlust von 50 % der Masse der Sensoren die entstehende (statische) Unwucht die Auswuchtgüte (1) des Systems, in das die Reibscheibe integriert ist, soweit verschlechtert, daß sie durch den Benutzer durch eine Veränderung des Fahrverhaltens erkannt werden kann. Dies kann durch entsprechendes Versetzen der Sensorelement gegen die Drehachse oder durch das Einbringen mehrere Sensorelemente sichergestellt werden. Dabei ist bei der Festlegung der Massen zu beachten, daß bei 100% Massenverlust der Sensoren die entstehende Unwucht die Funktionsfähigkeit des Systems nicht beeinträchtigt.
(1) Die Auswuchtgüte ist definiert durch
Q = (statische Unwucht / Rotormasse)* Winkelgeschwindigkeit

Üblicherweise liegt die Masse eines Sensor-Elements mindestens im Bereich von ca. 10 bis 12 g bei einer Masse der Reibscheibe von ca. 3 kg, was mindestens ca. 0,3% der Masse der Reibscheibe entspricht.

In den Zeichnungen ist die Erfindung näher erläutert. Dabei zeigen
- Fig. 1: einen Schnitt durch eine Reibscheibe **1** mit verschiedenen Sensorelementen **2a** bis **2e**,
- Fig. 2: eine Draufsicht auf eine Reibscheibe **1** mit verschiedenen diskreten Ausführungsformen von Sensorelementen **2e** bis **2i**, und
- Fig. 3: einen Draufsicht auf eine Reibscheibe mit einem ellipsenförmigen Sensorelement **2j**.

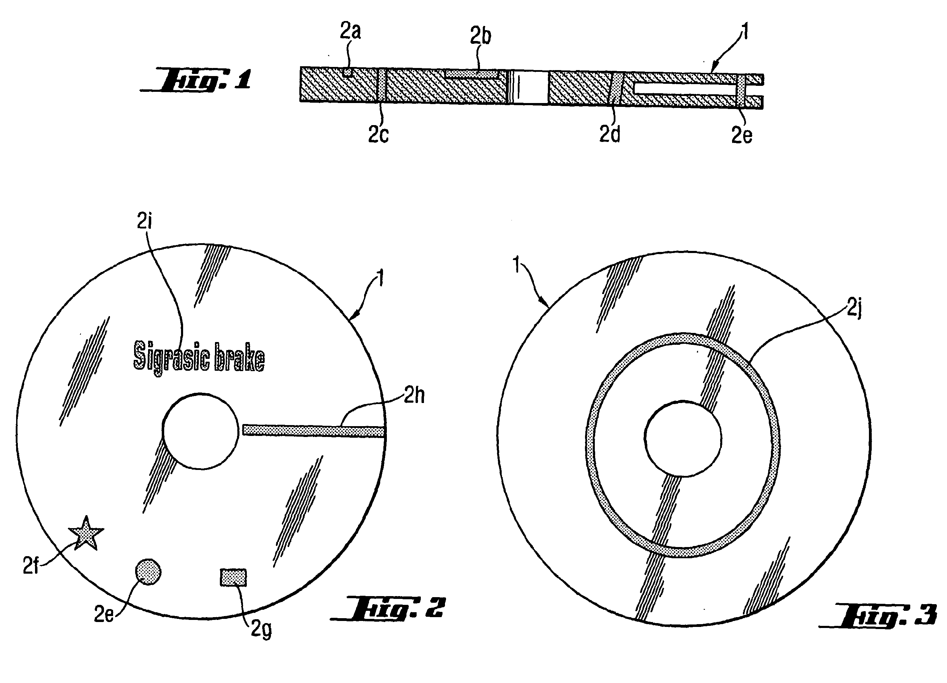

Fig. 1 zeigt einen Schnitt durch eine Reibscheibe **1,** in die verschiedene Sensorelemente **(2a, 2b)** in der Oberfläche der Reibscheibe eingelassen sind bzw. stäbchenförmige Sensoren **(2c, 2d, 2e)** die parallel oder geneigt zur Drehachse der Reibscheibe sein können, durch die gesamte Dicke der Reibscheibe reichen. **2e** durchstößt hierbei den Kanal einer innenbelüfteten Bremsscheibe. Beide Ausführungen von Sensorelementen können auf beide beschriebenen Arten eingebracht werden, einerseits Einbetten des Sensor-Vorkörpers in die Kohlenstoff-haltige Keramik, und anschließend gemeinsames Infiltrieren mit flüssigem Silicium, oder andererseits Einkleben eines Sensor-Körpers in die (z. B. fertig silicierte C/SiC-) Reibscheibe.
Fig. 2 zeigt eine Reibscheibe **1** in Draufsicht mit verschiedengestaltigen Sensoren **2e** bis **2h** sowie einer Ausführung der Sensorelement in Form einer Beschriftung **2i**. Selbstverständlich ist bei der praktischen Ausführung darauf zu achten, daß die Markierungszonen mehrerer Sensoren rotationssymmetrisch (zumindest zweizählige Symmetrieachse als Drehachse) um die Achse angeordnet sind. bevorzugt werden solche Anordnungen der Flächenelemente der Sensoren, die eine zweizählige, dreizählige, vierzählige oder sechszählige Symmetrieachse bezüglich der Drehachse der Reibscheibe aufweisen.
Fig. 3 zeigt eine Reibscheibe **1** in Draufsicht mit einem ellipsenförmigen Sensorelement **2j**.

Sobald ein Sensor eine derart große Fläche (im Fall **2h** und **2j**) einnimmt, kann er nur in die Oberfläche eingelassen werden. In den gezeigten Fällen wäre sogar sonst eine einstückige Fertigung der Reibscheibe unmöglich. Sensoren der Art **2a** bis **2g** und **2i** können sowohl in die Oberfläche eingelassen werden als auch in durchgehender (Stäbchen-) Form in die Reibscheibe eingebracht werden.

Werden beispielsweise bei einer Ausführungsform mit vier Sensorelementen mit ursprünglich derselben Masse jeweils zwei nebeneinanderliegende aus dem selben Werkstoff ausgeführt, und das gegenüberliegende Paar aus einem zweiten Werkstoff, wobei beide unterschiedlichen Sensorwerkstoffe unterschiedliche Oxidations- oder Verschleißempfindlichkeit haben, so wird bei Verschleiß durch den unterschiedlich schnellen Abbau zusätzlich eine Unwucht erzeugt, die insbesondere beim schnellen Fahren spürbar ist.

### Ausführungsbeispiele:

### Beispiel 1

Zur Herstellung einer Bremsscheibe mit Verschleissindikator mit optischer Indikationswirkung wird ein poröser CFC-Körper in der Form der Bremsscheibe mit einem Aussendurchmesser von 350mm hergestellt. In diesem Bremsscheibenkörper ist bereits eine Vertiefung für die Aufnahme eines flächigen Sensorelementes gemäß Skizze 2e vorgesehen, die sich in der Mitte des dem Bremsbelag gegenüberliegenden Bereiches auf der später aussenliegenden Seite der Bremsscheibe befindet. Die Abmessungen der runden Vertiefung sind 20mm im Durchmesser und 4mm in der Tiefe. In die Vertiefung wird ein graphitiertes CFC-Element mit der Dichte 1,09 g/cm³ eingepasst. Der Bremsscheibenkörper wird hierauf in den Ofen gelegt, mit Siliziumgranulat überschichtet und im Vakuum auf 1600-1900°C erhitzt, wobei das Silizium den Körper infiltriert und den Sensor fest mit der Bremsscheibe verbindet.
Der Unterschied der Oxidationsgeschwindigkeit ist so eingestellt, dass das Sensorelement bei einer Referenztemperatur von 800°C innerhalb 1 Stunde einen Gewichtsverlust von 65% aufweist. Dieser Gewichtsverlust ist deutlich an der rauhen und porösen Struktur zu erkennen.
Im Gegensatz hierzu liegt der oxidative Gewichtsverlust der Referenzbremsscheibe ohne Sensorelement unter den gleichen Bedingungen bei ca. 12%. Die Oberfläche ist gegenüber dem Sensorelement deutlich glatter und dichter.

### Beispiel 2

Zur Herstellung einer Bremsscheibe mit Verschleissindikator mit optischer Indikationswirkung wird ein poröser CFC-Körper in der Form der Bremsscheibe mit einem Aussendurchmesser von 350mm hergestellt. In diesem Bremsscheibenkörper sind bereits zwei Vertiefungen für die Aufnahme eines flächigen Sensorelementes gemäß Skizze 2f vorgesehen, die sich auf jeweils gegenüberliegenden Oberflächen der Bremsscheibe ausserhalb der dem Reibbelag gegenüberliegenden Zone befinden. Die äußeren Abmessungen der Vertiefung sind 20mm im Durchmesser und 4mm in der Tiefe. Der Bremsscheibenkörper wird wie in Beispiel 1 beschrieben siliziert.
In die Vertiefung wird ein Graphitelement der Dichte 1,75g/cm³ eingeklebt.

### Beispiel 3:

Zur Herstellung einer Bremsscheibe mit Verschleissindikator mit mechanischer Indikationswirkung gemäß Fig 1 wird ein poröser CFC-Körper in der Form der Bremsscheibe mit einem Aussendurchmesser von 350mm hergestellt. Die Bremsscheibe besitzt Kanäle zur Innenbelüftung. Durch diesen Bremsscheibenkörper wird ein Graphitstift (2 e) senkrecht hindurchgesteckt, so dass er von einer Oberfläche zur anderen reicht und einen Kanal der Innenbelüftung durchquert. Der Graphitstift hat einen Durchmesser von 5,5mm. Der Stift wird mit einem Phenolharz-Kleber in den Bohrungen befestigt. Hierauf erfolgt die Silizierung der Bremsscheibe wie in Beispiel 1 beschrieben.
Der Unterschied der Oxidationsgeschwindigkeiten bei einer Referenztemperatur von 800°C wird ist so eingestellt, dass sich der Stift durch dessen Abbrand nach ca. 1 Stunde aus der Verankerung löst beziehungsweise zerfällt. Hierdurch erfährt die zuvor ausgewuchtete Scheibe eine Unwucht, die sich dem Fahrer durch Vibrationen bemerkbar macht. Der Abbrandzustand des Graphitstabes kann aber ebenso optisch durch den Fachmann festgestellt werden.

### Bezugszeichenliste

- 1: Reibscheibe
- 2a bis: 2j Sensorelemente
- 2a: oberflächliches kleines Sensorelement
- 2b: oberflächliches großes Sensorelement
- 2c, 2e: stabförmiges durchgehendes Sensorelement, parallel zur Drehachse
- 2d: stabförmiges durchgehendes Sensorelement, im Winkel zur Drehachse
- 2f: sternförmiges Sensorelement
- 2g: rechteckiges Sensorelement
- 2h: radiales längliches Sensorelement
- 2i: Sensorelement in Form einer Beschriftung
- 2j: ellipsenförmiges Sensorelement

## Patentansprüche

1. Reibscheibe, insbesondere eine Brems- oder Kupplungsscheibe, aus mit Kohlenstoffasern verstärktem Keramik-Verbundwerkstoff **A**, mit mindestens einer als Reibschicht ausgebildeten Deckfläche, **dadurch gekennzeichnet, daß** mehr als 0,1 % und bis zu 20 % der Reibfläche aus einem anderen Werkstoff **B**, insbesondere einem kohlenstoffhaltigen Werkstoff, besteht, wobei dieser andere Werkstoff eine geringere Verschleiß- und Oxydationsbeständigkeit aufweist als der Werkstoff **A** der restlichen Reibfläche und der Tragzone der Reibscheibe, und so als Sensor den Verschleißzustand der Reibscheibe bemerkbar macht.

2. Reibscheibe gemäß Anspruch 1, **dadurch gekennzeichnet, daß** die Unwucht der Reibscheibe bei einem Masseverlust von 50 % der Elemente aus dem Werkstoff **B** die Auswuchtgüte um mindestens 5 % verschlechtert.

3. Reibscheibe gemäß Anspruch 1, **dadurch gekennzeichnet, daß** die Dicke der Elemente aus dem Werkstoff **B** das 0,1fache bis 10fache der Dicke der Reibschicht und unter 100 % der Dicke der Reibscheibe beträgt.

4. Reibscheibe nach einem der Ansprüche 1 bis 3, **dadurch gekennzeichnet, daß** der Werkstoff **A** der Tragzone und der Reibfläche mit Kohlenstoffasern verstärkte Keramik ist, deren Matrix Siliciumcarbid, Silicium und Kohlenstoff enthält.

5. Reibscheibe nach Anspruch 4, **dadurch gekennzeichnet, daß** der Werkstoff **A** der Tragzone und der Reibfläche erhältlich ist durch Infiltration eines mit Kohlenstoffasern verstärkten Kohlenstoff-Körpers mit flüssigem Silicium und Reaktion des Siliciums mit mindestens einem Teil des Kohlenstoffs der Matrix zu Siliciumcarbid.

6. Reibscheibe nach einem der Ansprüche 1 bis 3, **dadurch gekennzeichnet, daß** der Massenanteil von Kohlenstoff im Werkstoff **B** über 40 % beträgt, bevorzugt über 60 %, und besonders bevorzugt über 90 %.

7. Reibscheibe nach einem der Ansprüche 1 oder 2, **dadurch gekennzeichnet, daß** mindestens ein Element aus dem Werkstoff **B** sich über die gesamte Dicke der Reibscheibe erstreckt.

8. Reibscheibe nach einem der Ansprüche 1 bis 3, **dadurch gekennzeichnet, daß** Elemente aus dem Werkstoff **B** rotationssymmetrisch in der Reibscheibe angeordnet sind.

9. Reibscheibe nach einem der Ansprüche 1 bis 3, **dadurch gekennzeichnet, daß** der Werkstoff **B** Kohlenstoff enthält in einer Form ausgewählt aus Graphit, Feinkorngraphit, Kohlenstoffasermatten, Kohlenstofffaservlies, kohlenstofffaserverstärktem Kohlenstoff (CFC) und Kohle.

10. Reibscheibe nach Anspruch 9, **dadurch gekennzeichnet, daß** der Werkstoff **B** als weitere Bestandteile Oxide, Nitride, Silicide und Carbide enthält.

11. Reibscheibe nach einem der Ansprüche 1 bis 3, **dadurch gekennzeichnet, daß** der Werkstoff **B** Bornitrid und/oder Silizizmcarbid und/oder Aluminiumoxid enthält.

12. Reibscheibe nach einem der Ansprüche 1 bis 3, **dadurch gekennzeichnet, daß** der Anteil der Oberfläche der Elemente aus dem Werkstoff **B** an der Boden- und Deckfläche der gesamten Reibscheibe mindestens 1 % beträgt.

13. Reibscheibe nach einem der Ansprüche 1 bis 3, **dadurch gekennzeichnet, daß** der Massenanteil des Werkstoffs **B** in der Reibscheibe mindestens 0,3 % beträgt.

14. Verfahren zur Herstellung einer Reibscheibe nach einem der Ansprüche 1 bis 3, **dadurch gekennzeichnet, daß** in Aussparungen einer Reibscheibe aus dem Werkstoff A passend geformte Elemente aus dem Werkstoff **B** eingelegt und befestigt werden.

15. Verfahren zur Herstellung einer Reibscheibe nach Anspruch 5, **dadurch gekennzeichnet, daß** Vorkörper der Elemente aus dem Werkstoff **B** vor der Siliciuminfiltration und Silicierung in hierfür vorgesehene Aussparungen (Vertiefungen oder Bohrungen) des mit Kohlenstoffasern verstärkten Kohlenstoff-haltigen Vorkörpers der Reibscheibe eingelegt oder eingeklebt werden, danach das Material mit flüssigem Silicium infiltriert wird, wobei sich der C/SiC-Werkstoff ausbildet und die Sensorelemente fest mit dem Reibring verbunden werden.

## Claims

1. A friction disc, in particular a brake or clutch disc, made from carbon-fibre-reinforced ceramic composite material A, with at least one top surface formed as a friction layer, **characterised in that** more than 0.1 % and up to 20 % of the friction surface consists of a different material B, in particular of a carbon-containing material, wherein this different material exhibits lower wear and oxidation resistance than the material A of the rest of the friction surface and the supporting zone of the friction disc, and thus makes apparent the wear situation of the friction disc in the manner of a sensor.

2. A friction disc according to claim 1, **characterised in that** the imbalance of the friction disc in the event of a loss of 50 % of the mass of the elements made from material B impairs balance quality by at least 5 %.

3. A friction disc according to claim 1, **characterised in that** the thickness of the elements made from material B amounts to 0.1 times to 10 times the thickness of the friction layer and under 100 % of the thickness of the friction disc.

4. A friction disc according to one of claims 1 to 3, **characterised in that** the material A of the supporting zone and the friction surface is a carbon-fibre-reinforced ceramic, the matrix of which contains silicon carbide, silicon and carbon.

5. A friction disc according to claim 4, **characterised in that** the material A of the supporting zone and the friction surface is obtainable by infiltration of a carbon-fibre-reinforced carbon body with liquid silicon and reaction of the silicon with at least part of the carbon of the matrix to yield silicon carbide.

6. A friction disc according to one of claims 1 to 3, **characterised in that** the carbon mass fraction in material B is over 40 %, preferably over 60 % and particularly preferably over 90 %.

7. A friction disc according to one of claims 1 or 2, **characterised in that** at least one element made from material B extends over the entire thickness of the friction disc.

8. A friction disc according to one of claims 1 to 3, **characterised in that** elements made from material B are arranged rotationally symmetrically in the friction disc.

9. A friction disc according to one of claims 1 to 3, **characterised in that** the material B contains carbon in a form selected from graphite, fine-grain graphite, carbon-fibre mats, carbon-fibre nonwovens, carbon-fibre-reinforced carbon (CFC) and coal.

10. A friction disc according to claim 9, **characterised in that** the material B contains as further constituents oxides, nitrides, silicides and carbides.

11. A friction disc according to one of claims 1 to 3, **characterised in that** the material B contains boron nitride and/or silicon carbide and/or aluminium oxide.

12. A friction disc according to one of claims 1 to 3, **characterised in that** the proportion of the surface area occupied by the elements made from material B on the bottom and top surfaces of the whole friction disk amounts to at least 1 %.

13. A friction disc according to one of claims 1 to 3, **characterised in that** the mass fraction of the material B in the friction disc amounts to at least 0.3 %.

14. A process for producing a friction disc according to one of claims 1 to 3, **characterised in that** appropriately shaped elements made from material B are inserted into recesses in a friction disc made from material A and attached therein.

15. A process for producing a friction disc according to claim 5, **characterised in that** preliminary bodies of the elements made from material B are inserted or adhered in recesses (indentations or bores) provided therefor in the carbon-fibre-reinforced, carbon-containing preliminary friction disc body prior to silicon infiltration and silication and the material is then infiltrated with liquid silicon, wherein the C/SiC material forms and the sensor elements are bonded firmly to the friction ring.

## Revendications

1. Disque de friction, en particulier un disque de frein ou d'embrayage, en matériau composite céramique A renforcé par des fibres de carbone, comprenant au moins une surface de recouvrement conçue en tant que couche de friction, **caractérisé en ce que** plus de 0,1% et jusqu'à 20% de la surface de friction sont composés d'un autre matériau B, en particulier d'un matériau contenant du carbone, cet autre matériau présentant une résistance à l'usure et à l'oxydation plus faible que le matériau A du reste de la surface de friction et de la zone porteuse du disque de friction et permet ainsi en tant que détecteur de rendre l'état d'usure du disque de friction perceptible.

2. Disque de friction selon la revendication 1, **caractérisé en ce que** le défaut d'équilibrage du disque de friction lors d'une perte de masse de 50% des éléments en matériau B détériore la qualité d'équilibrage d'au moins 5%.

3. Disque de friction selon la revendication 1, **caractérisé en ce que** l'épaisseur des éléments en matériau B est de 0,1 fois à 10 fois supérieure à l'épaisseur de la couche de friction et inférieure à 100% de l'épaisseur du disque de friction.

4. Disque de friction selon l'une quelconque des revendications 1 à 3, **caractérisé en ce que** le matériau A de la zone porteuse et de la surface de friction est une céramique renforcée par des fibres de carbone dont la matrice contient du carbure de silicium, du silicium et du carbone.

5. Disque de friction selon la revendication 4, **caractérisé en ce que** le matériau A de la zone porteuse et de la surface de friction peut être obtenu par infiltration d'un corps en carbone renforcé par des fibres de carbone contenant du silicium fluide et réaction du silicium avec au moins une partie du carbone de la matrice pour former du carbure de silicium.

6. Disque de friction selon l'une quelconque des revendications 1 à 3, **caractérisé en ce que** le rapport de masse du carbone dans le matériau B est supérieur à 40%, de manière préférentielle supérieur à 60% et de manière particulièrement préférentielle supérieur à 90%.

7. Disque de friction selon l'une des revendications 1 ou 2, **caractérisé en ce qu'**au moins un élément en matériau B s'étend sur l'ensemble de l'épaisseur du disque de friction.

8. Disque de friction selon l'une quelconque des revendications 1 à 3, **caractérisé en ce que** des éléments en matériau B sont disposés dans le disque de friction en symétrie de révolution.

9. Disque de friction selon l'une quelconque des revendications 1 à 3, **caractérisé en ce que** le matériau B contient du carbone dans une forme sélectionnée à partir de graphite, de graphite à grains fins, de nattes de fibres de carbone, de non-tissés de fibres de carbone, de carbone renforcé par des fibres de carbone (CFC) et de charbon.

10. Disque de friction selon la revendication 9, **caractérisé en ce que** le matériau B contient en tant qu'autres composants des oxydes, des nitrures, des siliciures et des carbures.

11. Disque de friction selon l'une quelconque des revendications 1 à 3, **caractérisé en ce que** le matériau B contient du nitrure de bore et/ou du carbure de silicium et/ou de l'oxyde d'aluminium.

12. Disque de friction selon l'une quelconque des revendications 1 à 3, **caractérisé en ce que** la proportion de la surface des éléments en matériau B par rapport aux surfaces supérieures et inférieures de l'ensemble du disque de friction s'élève à au moins 1%.

13. Disque de friction selon l'une quelconque des revendications 1 à 3, **caractérisé en ce que** le rapport de masse du matériau B dans le disque de friction est d'au moins 0,3%.

14. Procédé de fabrication d'un disque de friction selon l'une quelconque des revendications 1 à 3, **caractérisé en ce que** des éléments en matériau B formés de manière adaptée sont insérés et fixés dans des évidements d'un disque de friction en matériau A.

15. Procédé de fabrication d'un disque de friction selon la revendication 5, **caractérisé en ce que** des corps antérieurs des éléments en matériau B sont insérés ou collés avant l'infiltration de silicium et la réaction du silicium dans des évidements (creux ou alésages), prévus à cet effet, du corps antérieur du disque de friction contenant du carbone renforcé par des fibres de carbone et **en ce que** le matériau est ensuite infiltré avec du silicium fluide, moyennant quoi le matériau C/SiC se forme et les éléments du détecteur sont reliés de manière solidaire avec le disque de friction.
